# EUROPÄISCHE PATENTSCHRIFT

(11) **EP 1 317 041 B1**
(45) Veröffentlichungstag und Bekanntmachung des Hinweises auf die Patenterteilung: **18.01.2006**
(21) Anmeldenummer: 02026852.0
(22) Anmeldetag: 30.11.2002
(51) Int. Cl.: H02G 3/18

(54) **Gerätedose für Elektro-Installationsgeräte**
Apparatus box for electrical installation device
Boitier d'appareil pour dispositif d'installation électrique

(30) Priorität: 03.12.2001 DE 20119664 U
(43) Veröffentlichungstag der Anmeldung: 04.06.2003
(73) Patentinhaber: GIRA GIERSIEPEN GmbH. & CO. KG, D-42477 Radevormwald (DE)
(72) Erfinder: Weingärtner, Günther, 51688 Wipperfürth (DE)
(74) Vertreter: Patentanwälte Dr. Solf & Zapf

(56) Entgegenhaltungen:
- EP-A- 1 077 516
- EP-A- 1 085 631
- CH-A- 385 950

## Beschreibung

Die vorliegende Erfindung betrifft eine Gerätedose zur haltemden Aufnahme von mindestens einem Elektro-Installationsgerät wie Schalter, Steckdose und/oder dergleichen, mit einem einseitig eine Montageöffnung aufweisenden Dosenkörper, gemäß dem oberbegriff des Patentanspruches 1.

Eine derartige Gerätedose (ein Installations Kasten) ist in dem Dokument EP 1 077 516 A1 offenbart. Dabei ist an einem Bodenteil ein Deckelteil über Scharnierhaken Schwenkbeweglich einhängbar, indem die Scharnierhaken in das Bodenteil eingesteckt werden. Die Schwenkbarkeit ist durch eine Flexibilität der Scharnierhaken gewährleistet. Das Deckelteil trägt bestimmte elektrische Geräte (Einbauten) .

Andere bekannte Gerätedosen dienen zur Montage von Elektro-Installationsgeräten, indem zunächst die Dose beispielsweise unter Putz (UP) oder auf Putz (AP) montiert und dann das jeweilige Gerät elektrisch angeschlossen, eingesetzt und befestigt wird. Zudem können solche Gerätedosen auch zur mittelbaren Halterung von Installationsgeräten in Kabelkanälen oder sonstigen größeren Aufnahmegehäusen verwendet werden. So ist beispielsweise in jedem der Dokumente DE-C-38 29 327, DE-C-39 05 226 und DE-C-43 31 580 eine Einbaudose beschrieben, die über Haltemittel an einem speziellen Bodenhalteprofil (sog. Hutschiene) eines Kabelkanals befestigt werden kann. Danach kann das jeweilige Installationsgerät unter gleichzeitigem elektrischem Anschluß in die Dose eingesetzt und darin befestigt werden.

Die Verwendung bekannter Gerätedosen führt zu einer umständlichen Geräte-Installation, weil jedes Gerät vor der eigentlichen Einbaubefestigung vom Elektroinstallateur am Montageort auch elektrisch angeschlossen werden muß.

Der Erfindung liegt die Aufgabe zugrunde, eine Gerätedose der genannten Art so zu verbessern, dass die Elektro-Installation am Montageort deutlich vereinfacht wird. Dabei soll auch auf wirtschaftliche Weise ein breites Anwendungspektrum erreicht werden.

Erfindungsgemäß wird dies durch die Merkmale des Anspruchs 1 erreicht.

Demnach Können mit dem Doses Körper wahlweise entmeder zwei Geräteträger nebeneinander oder nur ein Geräteträger mittig in der Montageöffnung verbunden werden. Dies führt zu einer hohen Installationsvariabilität und zu dem angestrebten breiten Anwendungsspektrum.

Zudem ist es vorteilhafterweise möglich, an jedem Geräteträger mehrere, beispielsweise zwei oder drei Geräteeinsätze vorzumontieren und auch untereinander fertig vorzuverdrahten. Der vormontierte und vorverdrahtete Geräteträger kann dann in wenigstens einer Vormontagelage an dem Dosenkörper fixiert werden, was einen einfachen Anschluß eines dosenseitg verlegten Anschlußkabels ermöglicht. Nach diesem elektrischen Anschluß braucht dann nur noch der Geräteträger in seine Montagelage überführt und fixiert zu werden.

Für ein breites Anwendungspektrum ist es ferner vorteilhaft, dass der bzw. jeder Geräteträger zur Halterung nahezu beliebiger Installationsgeräte ausgelegt werden kann, beispielsweise für übliche Installationsschalter, Steckdosen und dergleichen in bestimmten Kombinationen, aber auch für Geräte zur Hauskommunikation, Haussteuerung, Signalgeräte, Bestandteile einer Alarmanlage, Leuchten und dergleichen mehr. Dazu läßt sich die erfindungsgemäße Gerätedose mit Vorteil in ein Kanalprofil einsetzen. Bei entsprechender Länge des Kanalprofils kann eine nahezu beliebige Anzahl von bestückten Gerätedosen in einer Reihe beispielsweise waagerecht als Brüstungsanordnung oder senkrecht als Säulenanordnung beispielsweise im Bereich neben einer Tür angeordnet werden. Durch eine nahezu beliebige Gerätekombination kann somit auf einfache Weise eine elektrische, akustische und/oder optische "Funktionssäule" realisiert werden.

In einer bevorzugten Ausführung der Erfindung ist der bzw. jeder Geräteträger über geeignete Verbindungsmittel derart um eine Schwenkachse verschwenkbar mit dem Dosenkörper verbindbar, dass er durch türartiges Verschwenken zwischen Vormontagelage und Montgelage stetig überführbar ist. Dadurch gibt es eigentlich mehrere (beliebige) Vormontagelagen, die wegen der Schwenkbeweglichkeit auch nicht genau definiert und fixiert sind. Dabei sind die Verbindungsmittel bevorzugt als Rastverbindung aus Schwenklagerzapfen und korrespondierenden Lageraufnahmen gebildet, wobei die die Schwenkachse definierenden Schwenklagerzapfen kraftformschlüssig in die Lageraufnahmen einrastbar sind. In der Montagelage ist der Geräteträger über zusätzliche Haltemittel fixierbar, die insbesondere ebenfalls als Rastmittel ausgebildet sind.

Alternativ dazu ist es aber auch möglich, den/jeden Geräteträger in der Vormontagelage an dem Dosenkörper relativ unbeweglich zu fixieren, wobei zum Überführen in die Montagelage der Geräteträger insgesamt wieder gelöst und in die Montagelage bewegt und so wieder fixiert wird.

Weitere vorteilhafte Ausgestaltungsmerkmale der Erfindung sind in den Unteransprüchen sowie der folgenden Beschreibung enthalten.

Anhand der Zeichnung und darin veranschaulichter, bevorzugter Ausführungen soll die Erfindung genauer erläutert werden.

Dabei zeigen:
- Fig. 1: eine Perspektivansicht einer erfindungsgemäßen Gerätedose mit einem in der Montagelage befindlicheß Geräteträger,
- Fig. 2: eine weitere Perspektivansicht mit zwei Geräteträgern in einer Zwischenstellung zwischen Vormontagelage und Montagelage,
- Fig. 3: eine Perspektivansicht nur des Dosenkörpers,
- Fig. 4: eine Perspektivansicht des Dosenkörpers mit einem Geräteträger in einer alternativen Montagelage,
- Fig. 5: eine Perspektivansicht nur des Geräteträgers mit einem daran befestigen Tragelement eines selbst nicht dargestettten Geräteeinsatzes,
- Fig. 6: eine Perspektivansicht einer zusätzlichen Abdeckplatte,
- Fig. 7: eine Teilansicht einer zusätzlichen Dekorabdeckung,
- Fig. 8: eine Perspektivansicht in einem montierten Zustand der Einzelteile,
- Fig. 9: eine perspektivische Explosionsansicht der Anordnung nach Fig. 8,
- Fig. 10: eine Perspektivansicht des in ein Aufnahmegehäuse eingesetzten Dosenkörpers,
- Fig. 11: eine Ansicht des Aufnahmegehäuses in einer Weiterbildung,
- Fig. 12: eine Perspektivansicht einer alternativen Ausgestaltung des Aufnahmegehäuses,
- Fig. 13: eine aufgeschnittene Perspektivansicht des Dosenkörpers in einem in das Aufnahmegehäuse nach Fig. 12 eingesetzten Zustand,
- Fig. 14: eine aufgeschnittene Perspektivansicht einer montierten Anordnung analog zu Fig. 8, jedoch mit dem Aufnahmegehäuse gemäß Fig. 12 und 13, und
- Fig. 15: eine schematische Ansicht eines beispielhaften Anwendungsfalls.

In den verschiedenen Figuren der Zeichnung sind gleiche Teile stets mit den gleichen Bezugszeichen versehen und brauchen daher in der Regel auch jeweils nur einmal beschrieben zu werden.

Eine erfindungsgemäße Gerätedose 1 weist einen Dosenkorper 2 auf, der in bevorzugter Ausgestaltung eine rechteckige Grundform mit einem rechteckigen Boden 4 und vier dazu senkrechten Seitenwänden, und zwar zwei längeren Seitenwänden 6 und zwei kürzeren Seitenwänden 8, aufweist Die Seitenwände 6, 8 begrenzen mit ihren freien, oberen Endkanten eine dem Boden 4 gegenüberliegende Montageöffnung 10 zum Einsetzen von selbst nicht dargestellten Geräteeinsätzen bestimmter (beliebiger) Elektro-Installationsgeräte.

Weiterhin weist die Gerätedose 1 mindestens einen als separates Einzelteil ausgeführten Geräteträger 12 auf, der an dem Dosenkörper 2 lösbar befestigbar ist An dem Geräteträger 12 kann mindestens ein Geräteeinsatz befestigt werden. Im dargestellten, bevorzugten Beispiel ist der Geräteträger 12 länglich rechteckig plattenförmig zur Halterung von drei Geräteeinsätzen in üblicher Reihenanordnung ausgebildet, wozu er entsprechend drei Geräte-Aufnahmeöffnungen 14 im üblichen Stichmaß-Abstand (Mittenabstand jeweils 71mm) aufweist.

Der Geräteträger 12 ist aber nicht auf die dargestellte Ausführung beschränkt, sondern kann - je nach Art des/der jeweiligen Gerätes/Geräte - mit beliebiger Form und Größe und mit beliebiger Anzahl, Form und Größe von Aufnahmeöffnung(en) 14 ausgebildet sein.

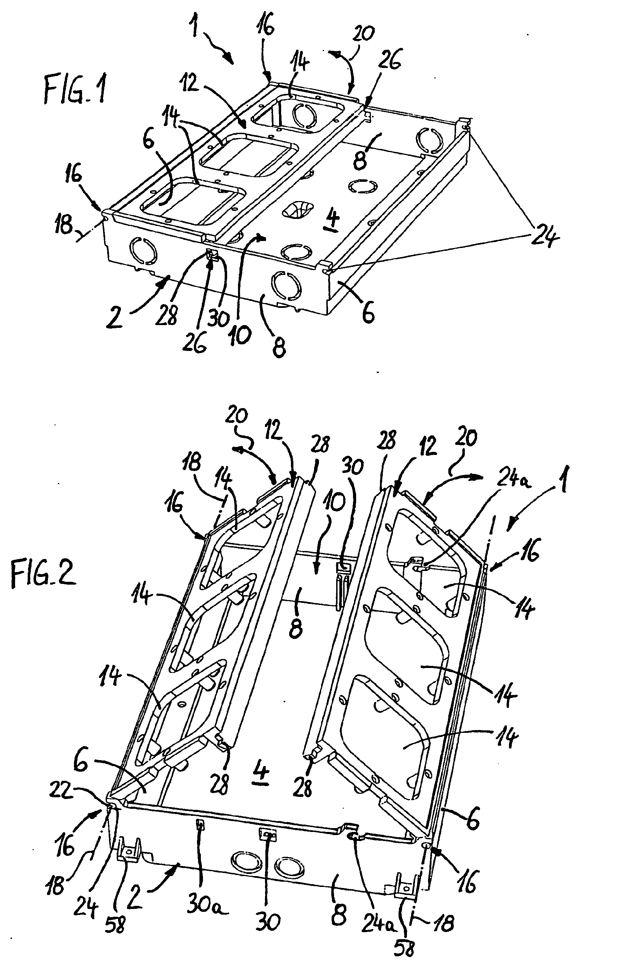

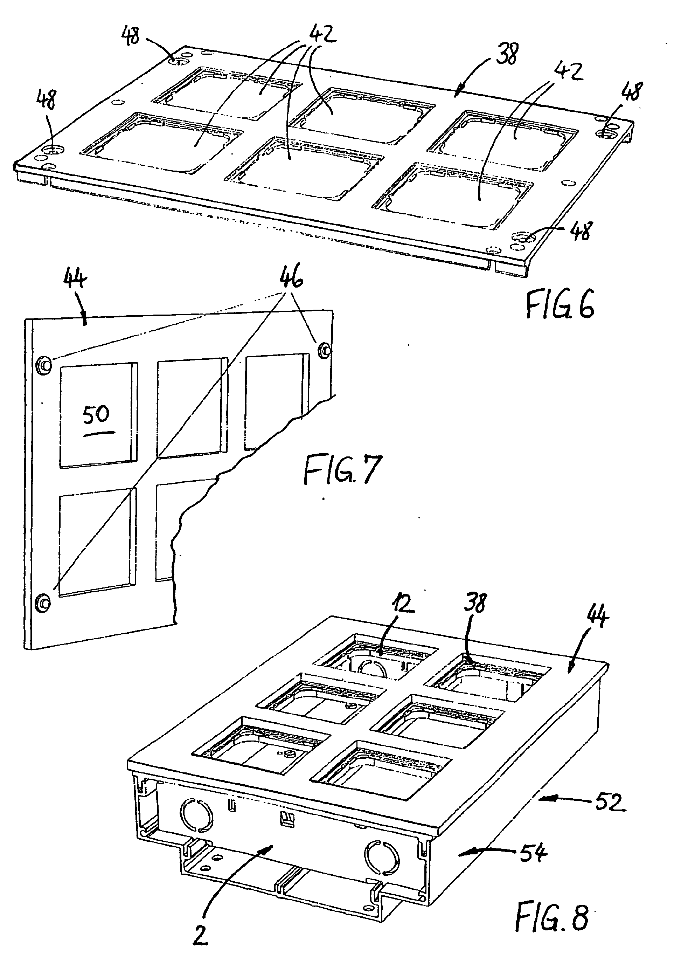

Der Geräteträger 12 ist in mindestens zwei unterschiedlichen Relativlagen an dem Dosenkörper 2 halterbar, und zwar in mindestens einer Vormontagelage (vgl. dazu Fig. 2), in der eine Anschlußseite des Geräteeinsatzes insbesondere zum Zwecke eines Kabelanschlusses zugänglich ist, oder in einer etwa in der Ebene der Montageöffnung 10 liegenden Montagelage (Fig. 1 und 4). In bevorzugter Ausgestaltung ist dabei der Geräteträger 12 über Verbindungsmittel 16 im Bereich der freien Oberkanten der längeren Seitenwände 6, insbesondere etwa im Eckbereich zu den angrenzenden kürzeren Seitenwänden 8, derart um eine zu der jeweiligen längeren Seitenwand 6 parallele Schwenkachse 18 verschwenkbar mit dem Dosenkörper 2 verbindbar, dass er durch einfaches Verschwenken stetig zwischen Vormontagelage und Montagelage überführbar ist. Dazu wird auf die in Fig. 1, 2 und 4 eingezeichneten Pfeile 20 verwiesen. Durch diese bevorzugte Schwenkbeweglichkeit gibt es somit eigentlich fast beliebig viele Vormontagelagen; der Geräteträger 12 wird türartig so weit geöffnet, bis der jeweilige Geräteeinsatz auf seiner Anschlußseite zum Kabefanschluß gut zü erreichen ist. Nachfolgend braucht nur noch der Geräteträger 12 in seine Montagelage nach Fig. 1 verschwenkt (geschlossen) zu werden.

Die Verbindungsmittel 16 sind bevorzugt als Rastverbindung aus entsprechend der Schwenkachse 18 gegenüberliegenden Schwenklagerzapfen 22 des Geräteträgers 12 sowie korrespondierenden Lageraufnahmen 24 des Dosenkörpers 2 gebildet. Dabei sind die die Schwenkachse 18 definierenden Schwenklagerzapfen 22 kraftformschlüssig in die Lageraufnahmen 24 einrastbar. Damit ist eine Halterung des Geräteträgers 12 an dem Dosenkörper 2 sowohl in den Vormontagelagen, als auch in der Montagelage gewährleistet. Vorzugsweise ist aber der Geräteträger 12 in der Montagelage über zusätzliche Haltemittel 26 fixierbar, die bevorzugt ebenfalls als Rastmittel ausgebildet sind. Vorzugsweise besitzt der Geräteträger 12 dazu in seinem der Schwenkachse 18 gegenüberliegenden Bereich zwei einander gegenüberliegende Rastansätze 28, die jeweils in eine Rastöffnung 30 im Bereich der kürzeren Seitenwände 8 einrasten.

In der dargestellten Ausführung ist der Dosenkörper 2 etwa doppelt so breit ausgebildet wie der relativ schmale Geräteträger 12, so dass an dem Dosenkörper 2 zwei Geräteträger 12 derart befestigbar sind, dass sie in der Montagelage parallel nebeneinander in der Montageöffnung 10 liegen. Die beiden Geräteträger 12 sind an den beiden längeren Seitenwänden 6 so schwenkbar einrastbar, dass sie nach Art einer zweiflügeligen Tür beweglich sind (Fig. 2).

Es ist aber möglich, bei der dargestellten Ausführung des Dosenkörpers 2 nur einen, dann entsprechend breiteren Geräteträger 12 mit der der Montageöffnung 10 etwa entsprechenden Größe vorzusehen. Dabei kann der Geräteträger 12 zur Halterung von mehreren, beispielsweise bis zu sechs Geräteeinsätzen ausgelegt sein, wozu er eine entsprechende Anzahl von Aufnahmeöffnungen 14 aufweist. Ferner kann alternativ auch der Dosenkörper 2 entsprechend schmaler für nur einen der schmalen Geräteträger 12 entsprechend der dargestellten Ausführung gemäß Fig. 1 bis 5 ausgelegt sein. In allen Fällen kann der jeweilige Geräteträger 12 auch nur eine größere Aufnahmeöffnung 14 für einen entsprechend größeren Geräteeinsatz, z. B. einen Teil einer Alarmanlage oder dergleichen, aufweisen. Der bzw. jeder Geräteträger 12 weist somit eine beliebige Anzahl (mindestens eine) von Aufnahmeöffnungen 14 mit beliebiger Größe und Flächenform zur Aufnahme beliebiger Geräte, wie beispielsweise übliche Elektro-installationsschalter, Steckdosen und/oder dergleichen und/oder Komponenten von Kommunikations- oder Alarmanlagen, auf. Ferner kann auch anstatt eines elektrischen Gerätes eine andere Komponente montiert werden, wie z. B. ein Aufnahmekasten für Gegenstände (z. B. Schlüsselkasten).

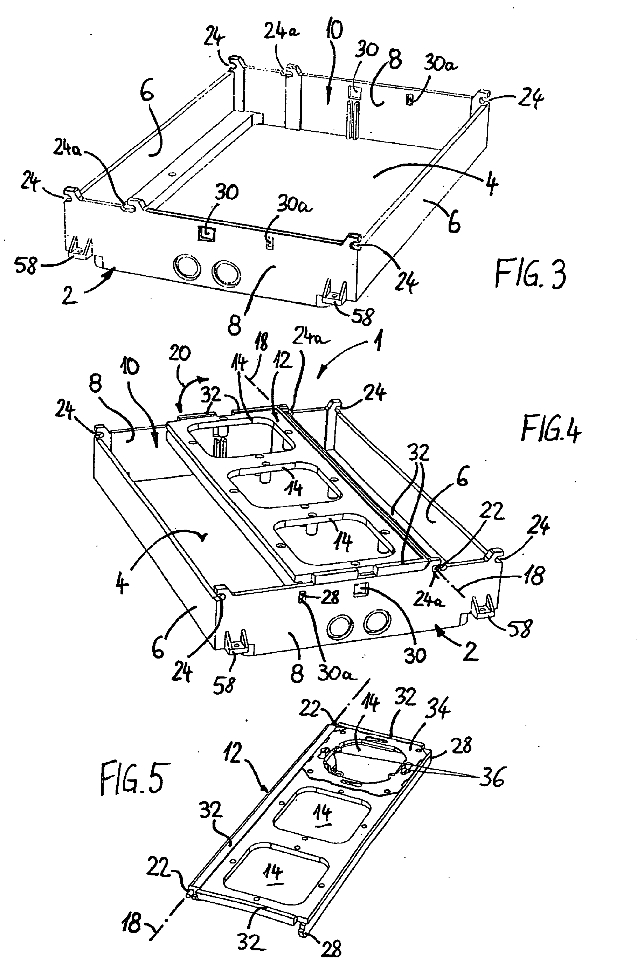

In der dargestellten, erfindungsgemäßen Ausführung ist weiterhin vorgesehen, dass der Dosenkörper 2 zusätzliche Verbindungsmittel insbesondere in Form zusätzlicher Lageraufnahmen 24a sowie zusätzlicher Rastöffnungen 30a (siehe insbesondere Fig. 3) derart aufweist, dass der Dosenkörper 2 gemäß Fig. 4 alternativ mit nur einem der schmalen Geräteträger 12 verbindbar ist, der dann in der Montagelage insbesondere mittig in der Montageöffnung 10 liegt.

Weiterhin ist es vorteilhaft, wenn der bzw. jeder Geräteträger 12 Ausrichtmittel - insbesondere in Form von wenigstens zwei randlichen, zueinander rechtwinkligen Anlagestegen 32 - zum Zusammenwirken mit jeweils einem beispielhaft in Fig. 5 eingezeichneten ring-bzw. rahmenförmigen Geräte-Tragelement 34 (sog. Tragring) des Geräteeinsatzes aufweist. Diese Ausrichtmittel erleichtern ein Ausrichten der Geräteeinsätze relativ zueinander erheblich, so dass auf einfache Weise durch Anlage der Tragelemente 34 an mindestens einem der Anlagestege 32 sowie paarweise aneinander eine exakte Reihenanordnung im erforderlichen Stichmaß-Abstand gewährleistet werden kann. Die Befestigung jedes Geräteeinsatzes erfolgt, indem das jeweilige Tragelement 34 mittels Schrauben 36 an dem Geräteträger 12 befestigt wird.

Für die in den Fig. 1 und 2 veranschaulichte Ausführungsform ist es weiterhin besonders vorteilhaft, wenn jeder der beiden Geräteträger 12 derart mit einem Bewegungsspiel mit dem Dosenkörper 2 verbindbar ist, dass die Geräteträger 12 in der Montagelage relativ zu dem Dosenkörper 2 in der Ebene der Montageöffnung 10 zumindest in Richtung der jeweiligen Schwenkachse 18 über einen bestimmten Bewegungsbereich hinweg beweglich sind. Diese Ausgestaltung ist vor allem für solche Anwendungen vorteilhaft, bei denen der Dosenkörper 2 unmittelbar auf einer Montagefläche, beispielsweise einer Wand, befestigt wird. Sollte die Montagefläche nicht ganz eben sein, so könnte sich der Dosenkörper 2 beim Verschrauben derart verziehen, dass die Montageöffnung 10 aus ihrer ursprünglichen rechteckigen Grundform parallelogrammartig verformt wird. In diesem Fall kann durch das bevorzugt gewährleistete Bewegungsspiel (schwimmende Lagerung) eine Ausrichtung der beiden Geräteträger 12 derart erfolgen, dass sie exakt seitlich fluchtend nebeneinander angeordnet sind.

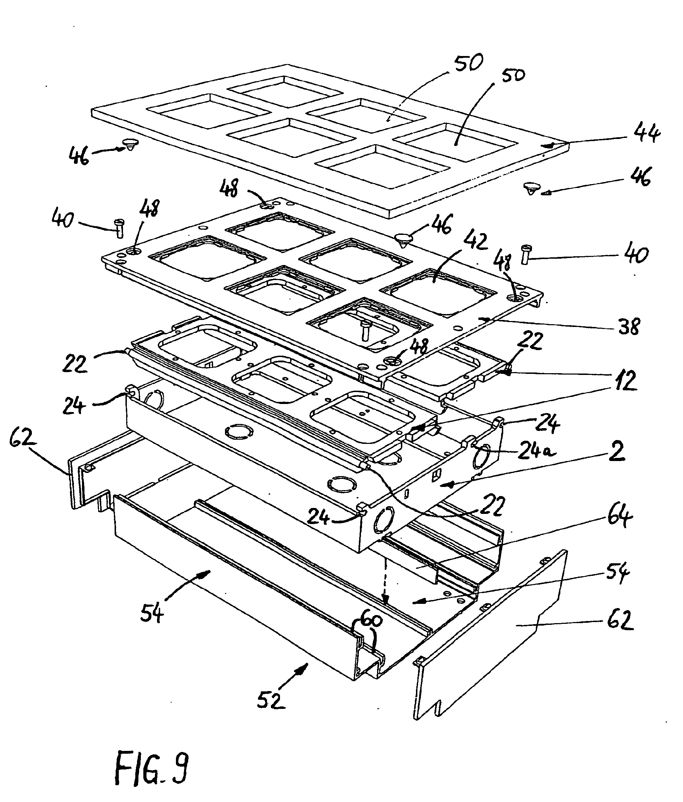

Wie sich nun aus den Fig. 6 und 9 ergibt, kann mit Vorteil eine zusätzliche Abdeckplatte 38 nach Art üblicher Installations-Abdeckrahmen vorgesehen sein, die auf dem Dosenkörper 2 und den in der Montagelage befindlichen Geräteträgern 12 angeordnet werden kann. Die Abdeckplatte 38 liegt dann parallel auf den Geräteträgern 12, und sie ist durch Bestandteile der jeweiligen Geräteeinsätze, wie beispielsweise mindestens einen Steckdosen-Zentraleinsatz (sog. Schuko-Topf), Schalter-Klemmrahmen, Schalterwippen und/oder dergleichen, und/oder durch separate Befestigungselemente, insbesondere Schrauben 40 (siehe Fig. 9), befestigbar. Wie weiterhin dargestellt ist, weist die Abdeckplatte 38 im Bereich jeder Geräteträger-Aufnahmeöffnung 14 eine entsprechende Rahmenöffnung 42 nach Art üblicher Installationsgeräte-Abdeckrahmen auf. In der dargestellten Ausführung überdeckt die Abdeckplatte 38 die gesamte Anordnung, wobei sie wenigstens eine oder z. B. bis zu sechs Rahmenöffnungen 42 in zwei nebeneinander liegenden Reihen zu je drei Rahmenöffnungen 42 aufweist. Anzahl, Größe und geometrische Form der Rahmenöffnung(en) 42 sind an den/die Geräteträger 12 und dessen/deren Geräte-Aufnahmeöffnung(en) 14 angepasst.

Nach dem Aufsetzen der Abdeckplatte 38 und der Montage der Funktiönsbestandteile der jeweiligen Installationsgeräte ist vorteilhafterweise bereits die Elektro-Montage abgeschlossen. Dies bedeutet, dass Funktion und elektrische Sicherheit gewährleistet sind.

In vorteilhafter Ausgestaltung kann aber nachträglich noch eine separate, insbesondere plattenförmige Dekorabdeckung 44 montiert werden (siehe Fig. 7 bis 9). Diese Dekorabdeckung 44 ist vorteilhafterweise derart auf der Abdeckplatte 38 fixierbar, dass sie unabhängig von der Halterung der Abdeckplatte 38 montierbar sowie lösbar bzw. auswechselbar ist. Vorzugsweise wird dies über Rastverbindungen gewährleistet, wozu die Dekorabdeckung 44 auf ihrer Unterseite Rastelemente 46 aufweist, die in korrespondierende Rastöffnungen 48 der Abdeckplatte 38 eingreifen. Je nach Material der Dekorabdeckung 44 können die Rastelemente 46 einstückig angeformt oder als separate Elemente insbesondere stoffschlüssig aufgebracht sein. Die Dekorabdeckung 44 weist im Bereich der-Geräte-Aufnahmeöffnungen 14 und der Rahmenöffnungen 42 ebenfalls entsprechende Rahmenöffnungen 50 auf.

Die Abdeckplatte 38 bildet gemeinsam mit der Dekorabdeckung 44 eine zweiteilige Geräte-Abdeckung, wobei die Dekorabdeckung 44 vorzugsweise bezüglich ihrer Flächenform und -größe an die Abdeckplatte 38 angepasst ist.

Die erfindungsgemäße Gerätedose 1 wird mit weiterem Vörteif durch ein äußeres Aufnahmegehäuse 52 ergänzt, in das der Dosenkörper 2 einsetzbar und darin lösbar befestigbar ist. In einer in den Fig. 8 bis 12 veranschaulichten ersten Variante ist das Aufnahmegehäuse 52 von einem Kanalprofil 54 nach Art eines Kabelkanals gebildet. Dabei ist der Dosenkörper 2 insbesondere mittels Schrauben 56 in dem Kanalprofil 54 befestigbar. Gemäß Fig. 2 bis 4 kann dazu der Dosenkörper 2 äußere, d. h. außerhalb seines Geräte-Aumahmeraums liegende Halteansätze 58 mit Durchgangslöchern für die Schrauben 56 aufweisen. Zusätzlich oder alternativ können gemäß Fig. 10 die Schrauben 56 auch den Boden 4 durchgreifen. Die Schrauben 56 greifen bevorzugt in sogenannte Schraubkanäle 60 des Kanalprofils 54 ein. Die Befestigung über die äußeren Halteeinsäize 58 ist vor allem dann vorteilhaft, wenn das Kanalprofil 54 aus Metall, insbesondere als Aluminium-Strangpressprofil, ausgebildet ist, weil dann bei einer inneren Befestigung nach Fig. 10 die Schrauben 56 elektrisch isoliert abgedeckt werden müßten.

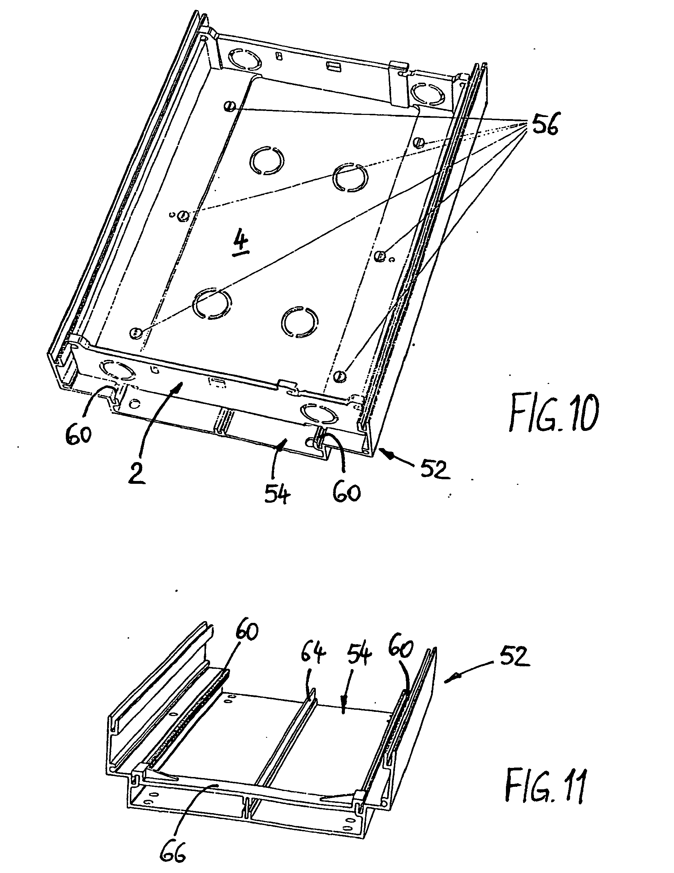

Da das Kanalprofil 54 als Endlosprofil stirnseitig offen ausgebildet ist, sind gemäß Fig. 9 die stirnseitigen Öffnungen vorteilhafterweise jeweils durch ein Endstück 62 verschließbar. Jedes Endstück 62 ist plattenförmig mit einer dem Querschnitt des Kanalprofils 54 entsprechenden Flächenform ausgebildet und vorzugsweise über Rastverbindungen fixierbar oder verschraubbar. Weiterhin können im Zusammenhang mit dem Kanalprofil 54 lösbar einsetzbare Schottwandelement 64 und/oder Niederhalteelemente 66 für Kabel vorgesehen sein (siehe insbesondere Fig. 9 und 11).

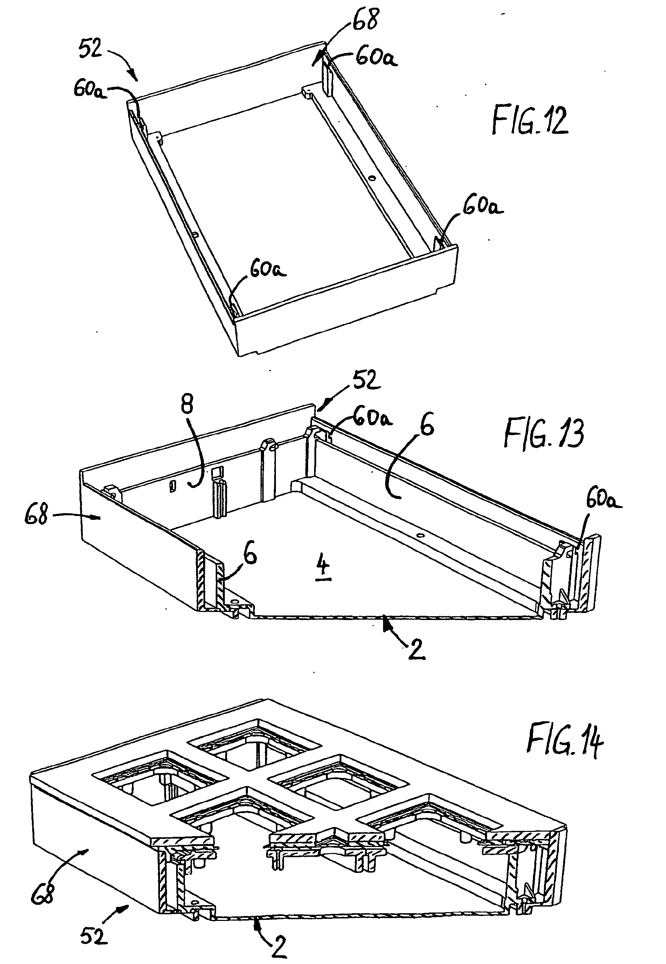

Gemäß Fig. 12 bis 14 ist als Aufnahmegehäuse 52 ein rahmenartiges Umgehäuse 68 vorgesehen, welches bezüglich Größe und Form zur relativ eng umschließenden Aufnahme des Dosenkörpers 2 ausgelegt ist Vorzugsweise sind der Dosenkörper 2 und das Umgehäuse 68 gemeinsam auf einer Montagefläche, z. B. einer Wand befestigbar.

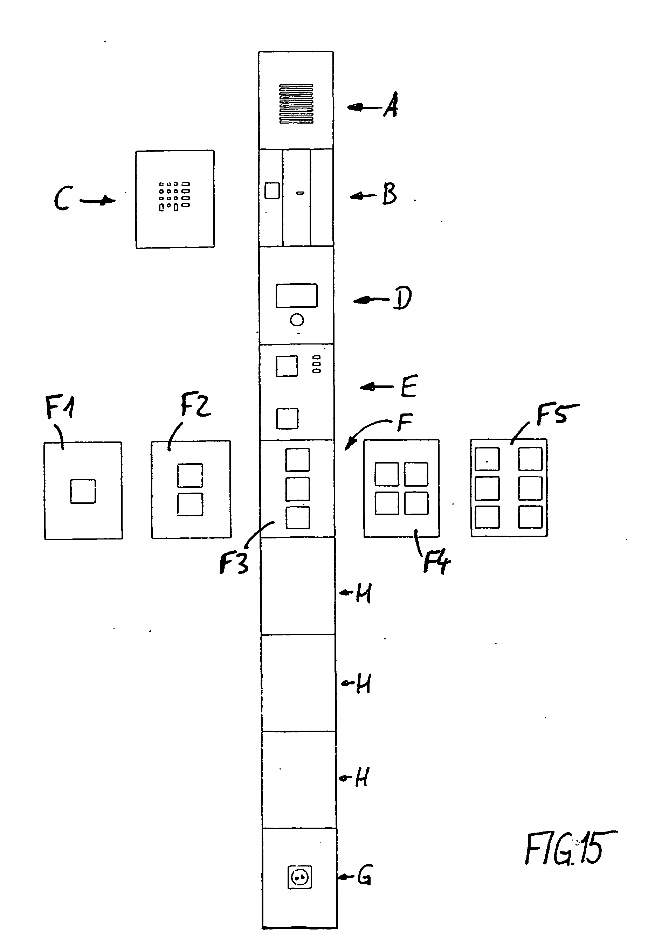

Im Zusammenhang mit dem Aufnahmegehäuse 52 ist es vorteilhaft, wenn die Abdeckplatte 38 bezüglich ihrer Flächenform und Größe derart ausgelegt ist, dass sie das Aufnahmegehäuse 52 im Wesentlichen nicht flächenmäßig überragt. Einerseits ergibt sich dadurch und insbesondere in Verbindung mit der flächenmäßig angepassten Dekorabdeckung 44 ein ansprechendes Design. Andererseits ist dies bezüglich der Abdeckplatte 38 insofern wesentlich, als dadurch aufgrund eines zum Abziehen fehlenden, als Hand-Kraftangriff verwendbaren Überstandes eine hohe Sabotagesicherheit gegen unbefugte Zugriffe gewährleistet ist. Dies ermöglicht die Anwendung für Bestandteile einer Alarmanlage, wobei durch die bevorzugte Schraubbefestigung der Abdeckplatte 38 ohnehin hohe Abzugskräfte gewährleistet sind. Die Schrauben 40 greifen dazu vorzugsweise in das Aufnahmegehäuse 52 ein, und zwar entweder in Schraubkanäle 60 des Kanalprofils 54 (Fig. 9) oder in entsprechende Schraubkanalabschnitte 60a des Umgehäuses 68 (Fig. 12, 13).

In Fig. 15 ist ein vorteilhafter Anwendungsfall beispielhaft veranschaulicht. Dabei können in ein entsprechend lang ausgeführtes Kanalprofil 54 mehrere erfindungsgemäße Gerätedosen 1 eingesetzt werden. Bei einer senkrechten bzw. vertikalen Anordnung kann dadurch eine "Funktionssäule" realisiert werden, wobei in den Gerätedosen 1 verschiedenartige Installationsgeräte montierbar sind. Beispielsweise kann im oberen Bereich bei A ein Signalgerät, z. B. ein Türgong, installiert werden. Darunter bei B bzw. C können Geräte einer Alarmanlage montiert werden. Bei D handelt es sich beispielsweise um ein Geräte zur Haussteuerung, wodurch verschiedenartige Funktionen steuerbar sind. Bei E können Bestandteile einer Türkommunikationsanlage (Türsprechanlage) installiert werden, beispielsweise ein Telefon, eine Sprechanlage, ein Display, oder dergleichen. Bei F können beliebige Funktionselemente, insbesondere übliche Elektro-Installationsgeräte, wie Schalter, Steckdosen und dergleichen installiert werden, und zwar in beliebigen Kombinationen F1 bis F5, In einem unteren Bereich G können insbesondere Steckdosen montiert werden. Schließlich können beliebige Leer-Felder H vorgesehen sein, wodurch der Säulencharakter komplettiert wird.

## Patentansprüche

1. Gerätedose (1) zur haltemden Aufnahme von mindestens einem Elektro-Installationsgerät, wie Schalter, Steckdose und/oder dergleichen, mit einem einseitig eine Montageöffnung (10) aufweisenden Dosenkörper (2) und mit mindestens einem separaten, an dem Dosenkörper (2) lösbar befestigbaren Geräteträger (12) zur vormontierten Halterung mindestens eines Geräteeinsatzes, wobei der Geräteträger (12) in mindestens zwei unterschiedlichen Relativlagen an dem Dosenkörper (2) halterbar ist, und zwar in mindestens einer Vormontagelage, in der eine Anschlußseite des Geräteeinsatzes zugänglich ist, oder in einer etwa in der Ebene der Montageöffnung (10) liegenden Montagelage,
**dadurch gekennzeichnet, dass** der Dosenkörper (2) mit zwei Geräteträgern (12) verbindbar ist, die in der Montagelage nebeneinander in der Ebene der Montageöffnung (10) liegen, wobei der Dosenkörper (2) zusätzliche Verbindungsmittel (24a, 30a) derart aufweist, dass er alternativ mit nur einem Geräteträger (12) verbindbar ist, der dann in der Montagelage etwa mittig in der Montageöffnung (10) liegt.

2. Gerätedose nach Anspruch 1,
**dadurch gekennzeichnet, dass** jeder Geräteträger (12) über Verbindungsmittel (16) derart um eine Schwenkachse (18) verschwenkbar mit dem Dosenkörper (2) verbindbar ist, dass er durch Verschwenken zwischen Vormontagelage und Montagelage überführbar ist.

3. Gerätedose nach Anspruch 2,
**dadurch gekennzeichnet, dass** dieVerbindungsmittel(16)als Rastverbindung aus Schwenklagerzapfen (22) und korrespondierenden Lageraufnahmen (24) gebildet sind, wobei die Schwenklagerzapfen (22) kraftformschlüssig in die Lageraufnahmen (24) einrastbar sind.

4. Gerätedose nach Anspruch 2 oder 3,
**dadurch gekennzeichnet, dass** jeder Geräteträger (12) in der Montagelage über zusätzliche Haltemittel (26) fixierbar ist, wobei die Haltemittel (26) insbesondere als Rastmittel ausgebildet sind.

5. Gerätedose nach einem der Ansprüche 1 bis 4,
**dadurch gekennzeichnet, dass** der Dosenkörper (2) eine rechteckige Grundform mit einem Boden (4) und vier Seitenwänden (6, 8) aufweist, wobei jeweils einer der Geräteträger (12) im Bereich einer der Seitenwände (6/8) mit dem Dosenkörper (2) verbindbar ist.

6. Gerätedose nach einem der Ansprüche 1 bis 5,
**dadurch gekennzeichnet, dass** jeder Geräteträger (12) als flaches, plattenförmiges Rahmenteil mit mindestens einer Geräte-Aufnahmeöffnung (14), vorzugsweise mit bis zu drei in einer Reihe benachbarten Aufnahmeöffnungen (14), ausgebildet ist.

7. Gerätedose nach einem der Ansprüche 1 bis 6,
**dadurch gekennzeichnet, dass** jeder Geräteträger (12) Ausrichtmittel - insbesondere in Form von randlichen Anlagestegen (32) - zum Zusammenwirken mit jeweils einem ring- bzw. rahmenförmigen Geräte-Tragelement (34) des Geräteeinsatzes aufweist.

8. Gerätedose nach einem der Ansprüche 1 bis 7,
**dadurch gekennzeichnet, dass** jeder Geräteträger (12) derart mit einem Bewegungsspiel mit dem Dosenkörper (2) verbindbar ist, dass der Geräteträger (12) in der Montagelage relativ zu dem Dosenkörper (2) in der Ebene der Montageöffnung (10) zumindest in Richtung seiner Schwenkachse (18) beweglich ist

9. Gerätedose nach einem der Ansprüche 1 bis 8,
**gekennzeichnet durch** eine auf dem Dosenkörper (2) und dem/den in der Montagelage befindlichen Geräteträger/n (12) anzuordnende Abdeckplatte (38).

10. Gerätedose nach Anspruch 9,
**dadurch gekennzeichnet, dass** die parallel auf dem/den Geräteträger/n (12) liegende Abdeckplatte (38) durch Bestandteile des/der jeweiligen Geräteeinsatzes/einsätze und/oder durch separate Befestigungselemente, insbesondere Schrauben (40), befestigbar ist.

11. Gerätedose nach Anspruch 9 oder 10,
**dadurch gekennzeichnet, dass** die Abdeckplatte (38) im Bereich der/jeder Geräteträger-Montageöffnung (14) eine entsprechende Rahmenöffnung (42) aufweist.

12. Gerätedose nach einem der Ansprüche 9 bis 11,
**gekennzeichnet durch** eine separate, insbesondere plattenförmige Dekorabdeckung (44), die derart auf der Abdeckplatte (38) fixierbar ist, dass sie unabhängig von der Halterung der Abdeckplatte (38) lösbar bzw. auswechselbar ist.

13. Gerätedose nach einem der Ansprüche 1 bis 12,
**gekennzeichnet durch** ein äußeres Aufnahmegehäuse (52) für den DosenKörper (2).

14. Gerätedose nach Anspruch 13,
**dadurch gekennzeichnet, dass** das Aufnahmegehäuse (52) von einem Kanalprofil (54) gebildet ist, wobei der Dosenkörper (2) insbesondere mittels Schrauben (56) in dem Kanalprofil (54) befestigbar ist

15. Gerätedose nach Anspruch 14,
**gekennzeichnet durch** mindestens ein Endstück (62) zum stirnseitigen Abschluß des Kanalprofils (54).

16. Gerätedose nach Anspruch 13,
**dadurch gekennzeichnet, dass** das Aufnahmegehäuse (52) von einem bezüglich Größe und Form zur umschließenden Aufnahme des Dosenkörpers (2) ausgelegten Umgehäuse (68) gebildet ist, wobei insbesondere der Dosenkörper (2) und das Umgehäuse (68) gemeinsam auf einer Montagefläche befestigbar sind.

17. Gerätedose nach einem der Ansprüche 13 bis 16,
**dadurch gekennzeichnet, dass** die Abdeckplatte (38) bezüglich ihrer Flächenform und -größe derart ausgelegt ist, dass sie das Aufnahmegehäuse (52) im Wesentlichen nicht flächenmäßig überragt.

## Revendications

1. Boîtier d'appareil (1) pour la réception avec maintien d'au moins un appareil électrique modulaire tel qu'un interrupteur, une prise de courant et/ou un appareil similaire, avec un corps de boîtier (2) comportant d'un côté une ouverture de montage (10) et avec au moins un support d'appareil (12) séparé, pouvant être fixé de manière amovible au corps de boîtier (2) pour la fixation prémontée d'au moins un appareil à encastrer, le support d'appareil (12) pouvant être maintenu sur le corps de boîtier (2) dans au moins deux positions relatives différentes, et notamment dans au moins une position de prémontage, dans laquelle un côté de raccordement de l'appareil à encastrer est accessible, ou dans une position de montage se situant à peu près dans la zone de l'ouverture de montage (10),
**caractérisé en ce que** le corps de boîtier (2) peut être relié à deux supports d'appareil (12) qui sont juxtaposés en position de montage, dans la zone de l'ouverture de montage (10), le corps de boîtier (2) présentant des moyens de liaison (24a, 30a) supplémentaires de sorte qu'il peut être relié, en variante, à un seul support d'appareil (12) qui est alors disposé, en position de montage, à peu près au centre de l'ouverture de montage (10).

2. Boîtier d'appareil selon la revendication 1,
**caractérisé en ce que** chaque support d'appareil (12) peut être relié au corps de boîtier (2) via des moyens de liaison (16), de manière pivotante autour d'un axe de pivotement (18), de sorte qu'il peut permuter entre la position de prémontage et la position de montage par basculement.

3. Boîtier d'appareil selon la revendication 2,
**caractérisé en ce que** les moyens de liaison (16) sont conçus sous forme de liaison encliquetable à l'aide de tourillons d'articulation (22) et des évidements de réception (24) correspondants, les tourillons d'articulation (22) étant encliquetables dans les évidements de réception (24) en force par complémentarité de forme.

4. Boîtier d'appareil selon l'une quelconque des revendications 2 ou 3,
**caractérisé en ce que** chaque support d'appareil (12) peut être fixé en position de montage à l'aide de moyens de fixation supplémentaires (26), les moyens de fixation (26) étant en particulier conçus comme des moyens d'encliquetage.

5. Boîtier d'appareil selon l'une quelconque des revendications 1 à 4,
**caractérisé en ce que** le corps de boîtier (2) présente une forme de base rectangulaire, avec un fond (4) et quatre parois latérales (6, 8), l'un des supports d'appareil (12) pouvant toujours être relié au corps de boîtier (2) dans la zone des parois latérales (6, 8).

6. Boîtier d'appareil selon l'une quelconque des revendications 1 à 5,
**caractérisé en ce que** chaque support d'appareil (12) est conçu comme une partie de châssis plate, en forme de platine comportant au moins une ouverture pour encastrement d'appareil (14), de préférence avec jusqu'à trois ouvertures pour encastrement d'appareil (14) juxtaposées en ligne.

7. Boîtier d'appareil selon l'une quelconque des revendications 1 à 6,
**caractérisé en ce que** chaque support d'appareil (12) présente des moyens d'alignement - en particulier sous la forme de barres d'appui de rebord (32) - pour agir conjointement avec respectivement un élément support d'appareil (34), de forme circulaire ou en forme de cadre, de l'appareil à encastrer.

8. Boîtier d'appareil selon l'une quelconque des revendications 1 à 7,
**caractérisé en ce que** chaque support d'appareil (12) peut être-relié au corps de boîtier (2) avec un jeu pour les mouvements de sorte que le support d'appareil (12) est mobile en position de montage, de manière relative par rapport au corps de boîtier (2), dans la zone de l'ouverture de montage (10), au moins dans le sens de son axe de pivotement.

9. Boîtier d'appareil selon l'une quelconque des revendications 1 à 8,
**caractérisé en** une platine de recouvrement (38) à monter sur le corps de boîtier (2) et en un/plusieurs support(s) d'appareil (12) se trouvant en position de montage.

10. Boîtier d'appareil selon la revendication 9,
**caractérisé en ce que** le cache (38) posé parallèlement sur le support/les supports d'appareil (12) peuvent être fixés par des constituants de l'appareil/des appareils à encastrer et/ou par des éléments de fixation séparés, en particulier des vis (40).

11. Boîtier d'appareil selon l'une quelconque des revendications 9 ou 10,
**caractérisé en ce que** le cache (38) présente dans la zone de/de chaque ouverture de montage du support d'appareil (14), une ouverture correspondante dans le cadre (42).

12. Boîtier d'appareil selon l'une quelconque des revendications 9 à 11,
**caractérisé en** une plaque décorative (44) qui peut être fixée sur le cache (38) de sorte qu'elle peut être retirée ou remplacée, de manière indépendante du support du cache (38).

13. Boîtier d'appareil selon l'une quelconque des revendications 1 à 12,
**caractérisé en** un boîtier d'encastrement (52) extérieur pour le corps du boîtier (2).

14. Boîtier d'appareil selon la revendication 13,
**caractérisé en ce que** le boîtier d'encastrement (52) est formé d'un profilé en forme de canal (54), le corps de boîtier (2) pouvant être fixé, en particulier au moyen de vis (56), dans le profilé en forme de canal (54).

15. Boîtier d'appareil selon la revendication 14,
**caractérisé en** au moins un élément d'extrémité (62) pour l'obturation en face avant du profilé en forme de canal (54).

16. Boîtier d'appareil selon la revendication 13,
**caractérisé en ce que** le boîtier d'encastrement (52) est formé d'un boîtier d'encadrement (68) conçu en ce qui concerne la taille et la forme, pour loger et entourer le corps de boîtier (2), le corps de boîtier (2) et le boîtier d'encastrement (68) pouvant en particulier être fixés ensemble sur la surface de montage.

17. Boîtier d'appareil selon l'une quelconque des revendications 13 à 16,
**caractérisé en ce que** le cache (38) est conçu sur le plan de la forme et de la taille de manière à ne pas être sensiblement en saillie au-dessus de la surface du boîtier d'encastrement (52).

## Claims

1. An appliance box (1) for receiving at least one electrical installation appliance in a retaining manner, such as a switch, a socket and/or the like, with a box body (2) having an assembly opening (10) on one side and with at least one separate appliance carrier (12) capable of being fastened to the box body (2) in a detachable manner for retaining at least one appliance insert in a pre-assembled manner, the appliance carrier (12) being capable of being retained on the box body (2) in at least two different relative positions, namely in at least one pre-assembly position, in which a connexion side of the appliance insert is accessible, or in an assembly position, situated substantially in the plane of the assembly opening (10), **characterized in that** the box body (2) is capable of being connected to two appliance carriers (12) which are situated adjacent to each other in the plane of the assembly opening (10) in the assembly position, the box body (2) comprising additional connexion means (24a, 30a) in such a way it is alternatively capable of being connected to only one appliance carrier (12), which is then situated substantially centrally in the assembly opening (10) in the assembly position.

2. An appliance box according to Claim 1, **characterized in that** each appliance carrier (12) is capable of being connected to the box body (2) by way of connexion means (16) so as to be pivotable about a pivot axis (18) in such a way that it is capable of being transferred by pivoting between the pre-assembly position and the assembly position.

3. An appliance box according to Claim 2, **characterized in that** the connexion means (16) are constructed in the form of a catch connexion comprising pivot-bearing pins (22) and corresponding bearing-receiving means (24), the pivot-bearing pins (22) being capable of engaging in the bearing-receiving means (24) in a frictionally / positively locking manner.

4. An appliance box according to Claim 2 or 3, **characterized in that** each appliance carrier (12) is capable of being fixed in the assembly position by way of additional retention means (26), the retention means (26) being constructed, in particular, in the form of catch means.

5. An appliance box according to any one of Claims 1 to 4, **characterized in that** the box body (2) has a basic shape which is rectangular, with a base (4) and four side walls (6, 8), one of the appliance carriers (12) being capable of being connected in each case to the box body (2) in the region of one of the side walls (6 / 8).

6. An appliance box according to any one of Claims 1 to 5, **characterized in that** each appliance carrier (12) is constructed in the form of a flat, plate-shaped frame part with at least one appliance-receiving opening (14), preferably with up to three receiving openings (14) adjacent in one row.

7. An appliance box according to any one of Claims 1 to 6, **characterized in that** each appliance carrier (12) has orientation means - in particular in the form of abutment webs (32) at the edges - for co-operation with one annular or frame-shaped appliance-carrier element (34) of the appliance insert in each case.

8. An appliance box according to any one of Claims 1 to 7, **characterized in that** each appliance carrier (12) is capable of being connected with movement clearance to the box body (2) in such a way that in the assembly position the appliance carrier (12) is movable relative to the box body (2) in the plane of the assembly opening (10) at least in the direction of its pivot axis (18).

9. An appliance box according to any one of Claims 1 to 8, **characterized by** a cover plate (38) which is to be arranged on the box body (2) and the appliance carrier or carriers (12) present in the assembly position.

10. An appliance box according to Claim 9, **characterized in that** the cover plate (38) arranged in a parallel manner on the appliance carrier or carriers (12) is capable of being fastened by components of the respective appliance insert or inserts and/or by separate fastening elements, in particular screws (40).

11. An appliance box according to Claim 9 or 10, **characterized in that** the cover plate (38) has a corresponding frame opening (42) in the region of the / each appliance-carrier assembly opening (14)

12. An appliance box according to any one of Claims 9 to 11, **characterized by** a separate, in particular plate-shaped, decorative covering (44) which is capable of being fixed on the cover plate (38) in such a way that it is capable of being released and replaced independently of the retention of the cover plate (38).

13. An appliance box according to any one of Claims 1 to 12, **characterized by** an external receiving housing (52) for the box body (2).

14. An appliance box according to Claim 13, **characterized in that** the receiving housing (52) is formed by a channel profile (54), the box body (2) being capable of being fastened in the channel profile (54), in particular by means of screws (56).

15. An appliance box according to Claim 14, **characterized by** at least one end member (62) for closing the channel profile (54) on the end face.

16. An appliance box according to Claim 13, **characterized in that** the receiving housing (52) is formed by a surrounding housing (68) designed to receive the box body (2) in an enclosing manner with respect to size and shape, the box body (2) and the surrounding housing (68), in particular, being capable of being jointly fastened to an assembly surface.

17. An appliance box according to any one of Claims 13 to 16, **characterized in that** the cover plate (38) is designed in such a way with respect to its surface shape and size that it does not project substantially beyond the surface of the receiving housing (52).
